# EUROPEAN PATENT APPLICATION

(11) **EP 4 009 284 A1**
(43) Date of publication of application: **08.06.2022**
(21) Application number: 20211041.7
(22) Date of filing: 01.12.2020
(51) Int. Cl.: G06T 19/00

(54) **METHOD AND APPARATUS FOR RENDERING THREE-DIMENSIONAL OBJECTS IN AN EXTENDED REALITY ENVIRONMENT**

(71) Applicant: XRSpace CO., LTD., Taoyuan City 330 (TW)
(72) Inventor: HU, Chih-Wei, 802 Kaohsiung City (TW)
(74) Representative: Emde, Eric

(57) **Abstract**

A method and an apparatus (100) for rendering three-dimensional objects in an XR environment are provided. The first part (O11) of a first object (01) is presented on a first render pass with a second object (02) and without the second part (012) of the first object (01). The first part (011) is nearer to the user side than the second object (02). The second object (02) is nearer to the user side than the second part (012). The second part (012) is presented on a second render pass with the second object (02) and without the first part (O11). A final frame is generated based on the first render pass and the second render pass. The first part (O11), the second part (012), and the second object (02) are presented in the final frame. Accordingly, a flexible way to render three-dimensional objects is provided.

## Description

### TECHNICAL FIELD

The present disclosure generally relates to an extended reality (XR) simulation, in particular, to a method and an apparatus for rendering three-dimensional objects in an XR environment.

### BACKGROUND

XR technologies for simulating senses, perception, and/or environment, such as virtual reality (VR), augmented reality (AR) and mixed reality (MR), are popular nowadays. The aforementioned technologies can be applied in multiple fields, such as gaming, military training, healthcare, remote working, etc.

In the XR, there are lots of virtual objects and/or real objects in an environment. Basically, these objects are rendered onto a frame based on their depths. That is, one object which is nearer to the user side would cover another one which is farther to the user side. However, in some situations, some objects should be presented on the frame all the time even though these objects are covered by others.

### SUMMARY OF THE DISCLOSURE

Accordingly, the present disclosure is directed to a method and an apparatus for rendering three-dimensional objects in an XR environment, to modify the default rendered rule.

In one of the exemplary embodiments, a method for rendering three-dimensional objects in an XR environment includes, but is not limited to, the following steps. The first part of a first object is presented on a first render pass with a second object and without the second part of the first object. The first part of the first object is nearer to the user side than the second object. The second object is nearer to the user side than the second part of the first object. The second part of the first object is presented on a second render pass with the second object and without the first part of the first object. A final frame is generated based on the first render pass and the second render pass. The first part and the second part of the first object and the second object are presented in the final frame, and the final frame is used to be displayed on a display.

In one of the exemplary embodiments, an apparatus for rendering three-dimensional objects in an XR environment includes, but is not limited to, a memory and a processor. The memory stores a program code. The processor is coupled to the host display and the memory and loads the program code to perform the following steps. The processor presents the first part of a first object with a second object and without a second part of the first object on a first render pass. The first part of the first object is nearer to a user side than the second object. The second object is nearer to the user side than the second part of the first object. The processor presents the second part of the first object with the second object and without the first part of the first object on a second render pass. The processor generates a final frame based on the first render pass and the second render pass. The first part and the second part of the first object and the second object are presented in the final frame, and the final frame is used to be displayed on a display.

In light of the foregoing, according to the method and the apparatus for rendering three-dimensional objects in the XR environment, the second part of the first object would be presented on one render pass even the second part of the first object is not nearer to the user side than the second object, and the whole of the first object may be presented in the final frame. Accordingly, it provides a flexible way to render three-dimensional objects.

It should be understood, however, that this Summary may not contain all of the aspects and embodiments of the present disclosure, is not meant to be limiting or restrictive in any manner, and that the invention as disclosed herein is and will be understood by those of ordinary skill in the art to encompass obvious improvements and modifications thereto.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a block diagram illustrating an apparatus for rendering three-dimensional objects in an XR environment according to one of the exemplary embodiments of the disclosure.
FIG. 2 is a flowchart illustrating a method for rendering three-dimensional objects in the XR environment according to one of the exemplary embodiments of the disclosure.
FIG. 3A is a schematic diagram illustrating a first render pass according to one of the exemplary embodiments of the disclosure.
FIG. 3B is a top view of the position relation of FIG. 3A.
FIG. 4A is a schematic diagram illustrating a second render pass according to one of the exemplary embodiments of the disclosure.
FIG. 4B is a top view of the position relation of FIG. 4A.
FIG. 5A is a schematic diagram illustrating a final frame according to one of the exemplary embodiments of the disclosure.
FIG. 5B is a top view of the position relation of FIG. 5A.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

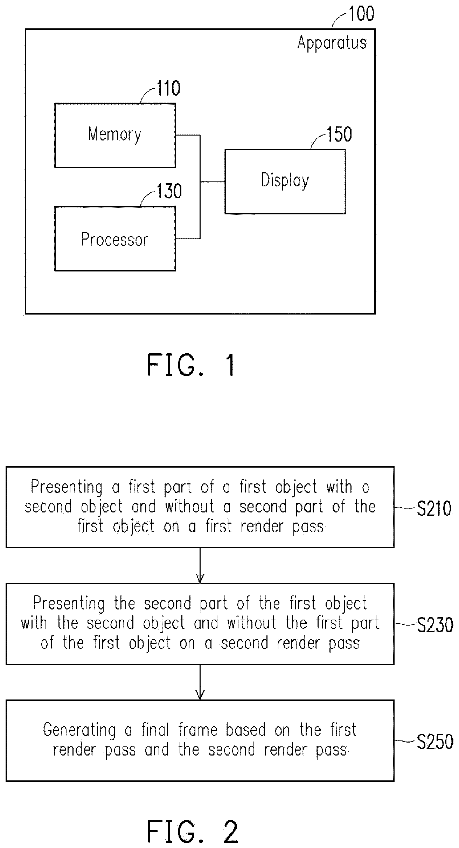

FIG. 1 is a block diagram illustrating an apparatus 100 for rendering three-dimensional objects in an XR environment according to one of the exemplary embodiments of the disclosure. Referring to FIG. 1, the apparatus 100 includes, but is not limited to, a memory 110 and a processor 130. In one embodiment, the apparatus 100 could be a computer, a smartphone, a head-mounted display, digital glasses, a tablet, or other computing devices. In some embodiments, the apparatus 100 is adapted for XR such as VR, AR, MR, or other reality simulation related technologies.

The memory 110 may be any type of a fixed or movable random-access memory (RAM), a read-only memory (ROM), a flash memory, a similar device, or a combination of the above devices. The memory 100 stores program codes, device configurations, buffer or permanent data (such as render parameters, render passes, or frames), and these data would be introduced later.

The processor 130 is coupled to the memory 110. The processor 130 is configured to load the program codes stored in the memory 110, to perform a procedure of the exemplary embodiment of the disclosure.

In some embodiments, the processor 130 may be a central processing unit (CPU), a microprocessor, a microcontroller, a graphics processing unit (GPU), a digital signal processing (DSP) chip, a field-programmable gate array (FPGA). The functions of the processor 130 may also be implemented by an independent electronic device or an integrated circuit (IC), and operations of the processor 130 may also be implemented by software.

In one embodiment, the apparatus 100 further includes a display 150 such as LCD, LED display, or OLED display.

In one embodiment, an HMD or digital glasses (i.e., the apparatus 100) includes the memory 110, the processor 130, and the display 150. In some embodiments, the processor 130 may not be disposed at the same apparatus with the display 150. However, the apparatuses respectively equipped with the processor 130 and the display 150 may further include communication transceivers with compatible communication technology, such as Bluetooth, Wi-Fi, and IR wireless communications, or physical transmission line, to transmit or receive data with each other. For example, the processor 130 may be disposed in a computer while the display 150 being disposed at a monitor outside the computer.

To better understand the operating process provided in one or more embodiments of the disclosure, several embodiments will be exemplified below to elaborate the operating process of the apparatus 100. The devices and modules in the apparatus 100 are applied in the following embodiments to explain the method for rendering three-dimensional objects in the XR environment provided herein. Each step of the method can be adjusted according to actual implementation situations and should not be limited to what is described herein.

FIG. 2 is a flowchart illustrating a method for rendering three-dimensional objects in the XR environment according to one of the exemplary embodiments of the disclosure. Referring to FIG. 2, the processor 130 may present a first part of a first object with a second object and without a second part of the first object on a first render pass (step S210). Specifically, the first object and the second obj ect may be a real or virtual three-dimensional scene, an avatar, a video, a picture, or other virtual or real objects in a three-dimensional XR environment. The three-dimensional environment may be a game environment, a virtual social environment, or a virtual conference. In one embodiment, the content of the first object has a higher priority than the content of the second object. For example, the first object could be a user interface such as a menu, a navigation bar, a window of the virtual keyboard, a toolbar, a widget, a setting, or app shortcuts. Sometimes, the user interface may include one or more icons. The second object is a wall, a door, or a table. In some embodiments, there are other objects in the same XR environment.

In addition, the first object includes a first part and a second part. It is assumed that, in one view of a user on the display 150, the first part of the first object is nearer to the user side than the second object. However, the second object is nearer to the user side than the second part of the first object. Furthermore, the second object is overlapped with the second part of the first object in this view of the user. In some embodiments, the second object may be further overlapped with the first part of the first object in this view of the user.

On the other hand, in multipass techniques, the same object may be rendered many times, while each rendering of the object doing a separate computation that gets accumulated into the final value. Each rendering of the object with a particular set of the state is called a "pass" or "render pass".

In one embodiment, the processor 130 may configure a depth threshold as being updated after a depth test, configure the depth test as that a pixel of the first or the second object is painted on the first render pass if the depth of the pixel of the first or the second object is not larger than the depth threshold, and configure the depth test as that the pixel of the first or the second object is not painted on the first render pass if the depth of the pixel of the first or the second object is larger than the depth threshold. Specifically, the depth is a measure of the distance from the user side to a specific pixel of an object. When implementing the depth test, such as the ZTest for Unity Shader, a depth texture (or a depth buffer) would be added on a render pass. The depth texture stores a depth value for each pixel of the first object or the second object in the same way that a color texture holds a color value. The depth values are calculated for each fragment, usually by calculating the depth for each vertex and letting the hardware interpolate these depth values. The processor 130 may test a new fragment of the object to see whether it is nearer to the user side than the current value (called as the depth threshold in the embodiments) stored in the depth texture. That is, whether the depth of the pixel of the first or the second object is less than the depth threshold is determined. Taking Unity Shader as an example, the function of the ZTest is set as "lequal", and the depth test would be passed if (or only if) the fragment's depth value is less than or equal to the stored depth value (i.e., the depth threshold). Otherwise, the processor 130 may discard the fragment. That is, the pixel of the first or the second object is painted on the first render pass if (or only if) the depth of the pixel of the first or the second object is not larger than the depth threshold. Furthermore, the pixel of the first or the second object is discarded on the first render pass if (or only if) the depth of the pixel of the first or the second object is larger than the depth threshold.

In addition, taking Unity Shader as an example, if the function of ZWrite is set as "on", the depth threshold would be updated if (or only if) the depth of the fragment passes the depth test.

In one embodiment, firstly, regarding the pixel of the second part of the first object, the pixel would be painted on the first render pass, and the depth threshold would be updated as the depth of the second part of the first object. Secondly, regarding the pixel of the second object, the pixel would be painted on the first render pass. The second object would cover the second part of the first object, and the depth threshold would be updated as the depth of the second object. Thirdly, regarding the pixel of the first part of the first object, the pixel would be painted on the first render pass, and the depth threshold would be updated as the depth of the first part of the first object. Furthermore, the first part of the first object may cover the second object.

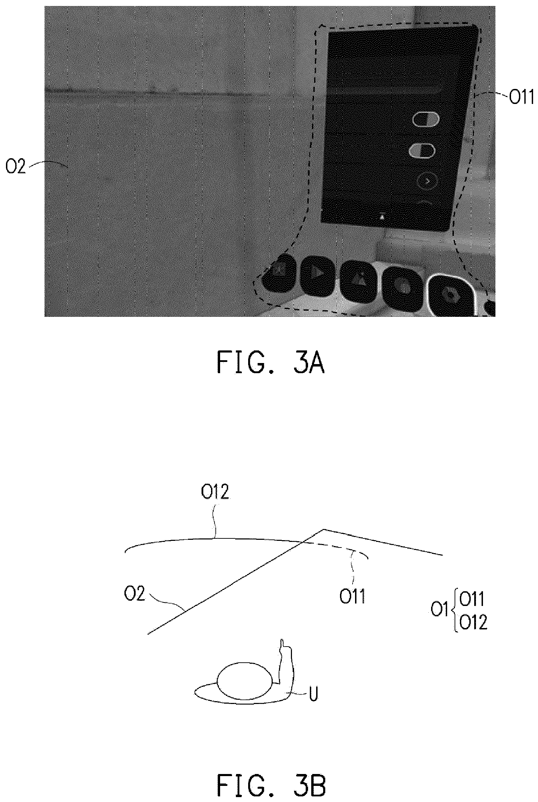

For example, FIG. 3A is a schematic diagram illustrating a first render pass according to one of the exemplary embodiments of the disclosure, and FIG. 3B is a top view of the position relation of FIG. 3A. Referring to FIGs. 3A and 3B, it is assumed the second object O2 is a virtual wall, and a user U stands in front of the second object O2. However, the surface of the second object O2 is not parallel to the user side of the user U, and the second part 012 of the first object 01 is located behind the second object O2 as shown in FIG. 3B. Therefore, in the first render pass, the second part 012 of the first object 01 is totally covered by the second object O2, so that the second part of the first object is invisible. However, the first part 011 of the first object 01 covers the second object O2. That is, the first part 011 of the first object 01 is visible as shown in FIG. 3A.

The processor 130 may present the second part of the first object with the second object and without the first part of the first object on a second render pass (step S230). Different from the rule of the first render pass, in one embodiment, the processor 130 may configure the depth threshold as not updating after the depth test, configure the depth test as that a pixel of the first or the second object is painted on the second render pass in response to a depth of the pixel of the first or the second object being larger than the depth threshold, and configure the depth test as that the pixel of the first or the second object is not painted on the second render pass in response to the depth of the pixel of the first or the second object being not larger than the depth threshold. Specifically, whether the depth of the pixel of the first or the second object is larger than the depth threshold is determined. Taking Unity Shader as an example, the function of the ZTest is set as "greater", and the depth test would be passed if (or only if) the fragment's depth value is larger than the stored depth value (i.e., the depth threshold). Otherwise, the processor 130 may discard the fragment. That is, the pixel of the first or the second object is painted on the second render pass if (or only if) the depth of the pixel of the first or the second object is larger than the depth threshold. Furthermore, the pixel of the first or the second object is discarded on the first render pass if (or only if) the depth of the pixel of the first or the second object is not larger than the depth threshold.

In addition, taking Unity Shader as an example, if the function of ZWrite is set as "off', the depth threshold would not be updated if (or only if) the depth of the fragment passes the depth test.

In one embodiment, firstly, regarding the pixel of the second part of the first object, the pixel would be painted on the second render pass, and the depth threshold would be updated as the depth of the second part of the first object. Secondly, regarding the pixel of the second object, the pixel may be painted on the second render pass without the part which is overlapped with the second part of the first object. The second part of the first object would cover the second object, and the depth threshold would be maintained as the depth of the second part of the first object. Thirdly, regarding the pixel of the first part of the first object, the pixel would be discarded on the second render pass, and the depth threshold would be maintained as the depth of the second part of the first object. Furthermore, the second object may cover the first part of the first object.

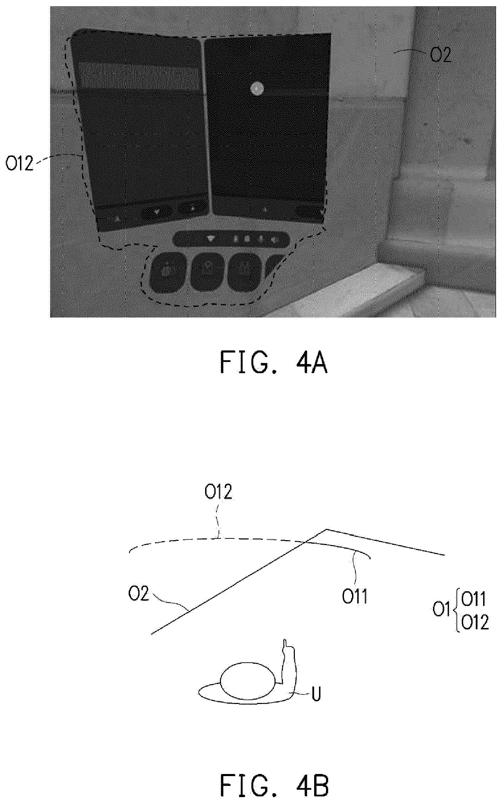

For example, FIG. 4A is a schematic diagram illustrating a second render pass according to one of the exemplary embodiments of the disclosure, and FIG. 4B is a top view of the position relation of FIG. 4A. Referring to FIGs. 4A and 4B, the second part 012 of the first object 01 is located behind the second object O2 as shown in FIG. 4B. Therefore, in the second render pass, the first part 012 of the first object 01 is totally covered by the second object O2, so that the first part 011 of the first object 01 is invisible. However, the second part 012 of the first object 01 covers the second object O2. That is, the second part 012 of the first object 01 is visible as shown in FIG. 4B.

In one embodiment, the processor 130 may perform alpha compositing on the second part of the first object with the second object. The alpha compositing is the process of combining one image with a background or another image to create the appearance of partial or full transparency. When picture elements (pixels) are rendered in separate passes or layers and then combine the resulting two-dimensional images into a single, final image/frame called the composite. The pixels of the second part of the first object are combined with the pixels of the second object.

For example, referring to FIGs. 3A and 4A, the second part 012 of the first object 01 has partial transparency, and the pixels of the second part 012 and the second object O2 are combined. However, the first part O11 of the first object 01 is presented without transparency.

In some embodiments, the grey level processing or another image processing may be performed on the second part of the first object.

The processor 130 may generate a final frame based on the first render pass and the second render pass (step S250). Specifically, the final frame is used to be displayed on the display 150. In the first render passes, the first part of the first object is presented without the second part. In the second render passes, the second part of the first object is presented without the first part. The processor 130 may render the part of the object or the whole of the object presented on any one of the first and the second render passes onto the final frame. Eventually, the first part and the second part of the first object and the second object are presented in the final frame. Then, the user can see the first and second parts of the first object (which may be the whole of the first object) on the display 150.

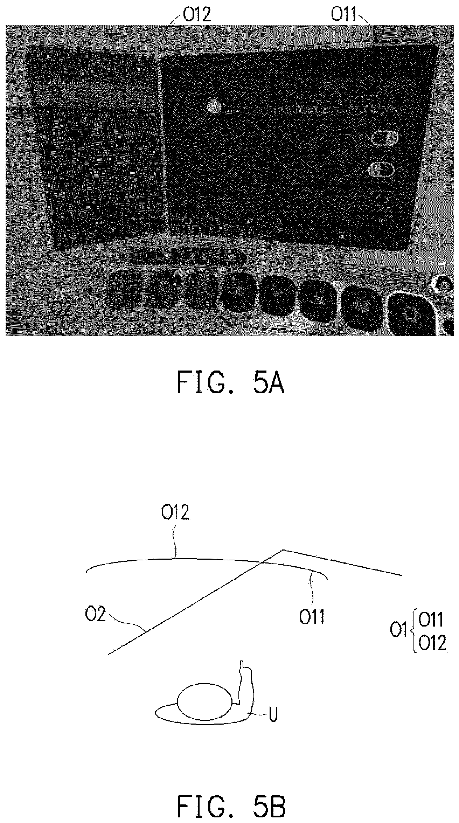

For example, FIG. 5A is a schematic diagram illustrating a final frame according to one of the exemplary embodiments of the disclosure, and FIG. 5B is a top view of the position relation of FIG. 5A. Referring to FIGs. 5A and 5B, based on the first render pass of FIG. 3A and the second render pass of FIG. 4A, in the final frame, the first part O11 and the second part 012 of the first object 01 and the second object O2 are presented. Therefore, the user U can see the whole user interface on the display 150.

In summary, the exemplary embodiments described above depicted the method and apparatus for three-dimensional objects in an XR environment. The second part of the first object, which is located at a farther position, would be presented on one render pass. Then, the final frame to-be-displayed on the display can be generated by the reference of the render pass having the second part of the first object. Therefore, the first part and the second part of the first object would be painted on the final frame. Accordingly, a flexible way to render three-dimensional objects is provided.

## Claims

1. A method for rendering three-dimensional objects in an extended reality, named XR hereinafter, environment, **characterized by** comprising:
presenting a first part (O11) of a first object (01) with a second object (O2) and without a second part (012) of the first object (O1) on a first render pass, wherein the first part (O11) of the first object (O1) is nearer to a user side than the second object (O2), and the second object (O2) is nearer to the user side than the second part (012) of the first object (O1);
presenting the second part (012) of the first object (O1) with the second object (O2) and without the first part (O11) of the first object (O1) on a second render pass; and
generating a final frame based on the first render pass and the second render pass, wherein the first part (O11) and the second part (012) of the first object (O1) and the second object (O2) are presented in the final frame, and the final frame is used to be displayed on a display (150).

2. An apparatus (100) for rendering three-dimensional objects in XR environment, comprising:
a memory (110), used to store program code; and
a processor (130), coupled to the memory (110), and the processor **characterized by** being used to load the program code to perform:
presenting a first part (O11) of a first object (O1) with a second object (O2) and without a second part (012) of the first object (O1) on a first render pass, wherein the first part (O11) of the first object (O1) is nearer to a user side than the second object (O2), and the second object (O2) is nearer to the user side than the second part (012) of the first object (O1);
presenting the second part (012) of the first object (O1) with the second object (O2) and without the first part (O11) of the first object (O1) on a second render pass; and
generating a final frame based on the first render pass and the second render pass, wherein the first part (O11) and the second part (012) of the first object (O1) and the second object (O2) are presented in the final frame, and the final frame is used to be displayed on a display (150).

3. The method of claim 1, **characterized in that** the step of presenting the second part (012) of the first object (O1) with the second object (O2) and without the first part (O11) of the first object (O1) on the second render pass comprises:
configuring a depth threshold as not updating after a depth test;
configuring the depth test as that a pixel of the first or the second object (O2) is painted on the second render pass in response to a depth of the pixel of the first or the second object (O2) being larger than the depth threshold; and
configuring the depth test as that the pixel of the first or the second object (O2) is not painted on the second render pass in response to the depth of the pixel of the first or the second object (O2) being not larger than the depth threshold, or the apparatus (100) of claim 2, **characterized in that** the processor (130) is further configured for:
configuring a depth threshold as not updating after a depth test;
configuring the depth test as that a pixel of the first or the second object (O2) is painted on the second render pass in response to a depth of the pixel of the first or the second object (O2) being larger than the depth threshold; and
configuring the depth test as that the pixel of the first or the second object (O2) is not painted on the second render pass in response to the depth of the pixel of the first or the second object (O2) being not larger than the depth threshold.

4. The method of claim 1, **characterized in that** the step of presenting the first part (O11) of the first object (O1) with the second object (O2) and without the second part (012) of the first object (O1) on the first render pass comprises:
configuring a depth threshold as being updated after a depth test;
configuring the depth test as that a pixel of the first or the second object (O2) is painted on the first render pass in response to a depth of the pixel of the first or the second object (O2) being not larger than the depth threshold; and
configuring the depth test as that the pixel of the first or the second object (O2) is not painted on the first render pass in response to the depth of the pixel of the first or the second object (O2) being larger than the depth threshold, or the apparatus (100) of claim 2, **characterized in that** the processor (130) is further configured for:
configuring a depth threshold as being updated after a depth test;
configuring the depth test as that a pixel of the first or the second object (O2) is painted on the first render pass in response to a depth of the pixel of the first or the second object (O2) being not larger than the depth threshold; and
configuring the depth test as that the pixel of the first or the second object (O2) is not painted on the first render pass in response to the depth of the pixel of the first or the second object (O2) being larger than the depth threshold.

5. The method of claim 1, **characterized in that** the step of presenting the second part (012) of the first object (O1) with the second object (O2) and without the first part (O11) of the first object (O1) on the second render pass comprises:
performing alpha compositing on the second part (012) of the first object (O1) with the second object (O2), or the apparatus (100) of claim 2, **characterized in that** the processor (130) is further configured for:
performing alpha compositing on the second part (012) of the first object (O1) with the second object (O2).

6. The method of claim 1 or the apparatus (100) of claim 2, **characterized in that** a content of the first object (O1) has a higher priority than a content of the second object (O2).

7. The method of claim 1 or the apparatus (100) of claim 2, **characterized in that** the first object (O1) is a user interface.
